# EUROPEAN PATENT APPLICATION

(11) **EP 4 596 912 A1**
(43) Date of publication of application: **06.08.2025**
(21) Application number: 23872495.9
(22) Date of filing: 27.09.2023
(51) Int. Cl.: F16C 33/66, F16C 33/10, F16C 33/12, F16C 33/32, F16C 33/37, F16C 33/44, F16H 57/04

(54) **SLIDING COMPONENT**

(30) Priority: 28.09.2022 JP 2022154942
(71) Applicant: NSK LTD., Tokyo 141-8560 (JP)
(72) Inventor: TAKEDA, Rie, Fujisawa-shi, Kanagawa 251-8501 (JP); MOTODA, Tomohiro, Fujisawa-shi, Kanagawa 251-8501 (JP)
(74) Representative: Grünecker Patent- und Rechtsanwälte PartG mbB
(86) International application number: PCT/JP2023/035319
(87) International publication number: WO 2024/071273

(57) **Abstract**

Provided is a sliding component in which a low-hardness first component and a high-hardness second component slide with a lubricant therebetween, wherein the configurational relationship between microroughness and large undulations imparted to the first component is optimized to enhance both lubricant retention and wettability, and to further improve anti-seizing properties. In the sliding component, the first component and the second component with higher hardness than the first component slide with a lubricant therebetween. The sliding component is imparted, in an area contacting the second component in the first component, with an isotropic texture in which the valley surface area is 1000 µm²/mm to 20000 µm²/mm, and the RLo (λc: 0.08 mm) is from 1% to 12%.

## Description

### TECHNICAL FIELD

The present invention relates to a sliding member in which a low-hardness member and a high-hardness member slide against each other via a lubricant.

### BACKGROUND ART

Various proposals have been made to improve durability of a sliding member in which two members slide against each other via a lubricant. As an example, for a purpose of increasing seizure resistance and improving durability of a rolling bearing, a surface of a retainer is roughened to improve lubricant retention.

For example, Patent Literature 1 describes a rolling bearing applied with a rough surface having fine micro-recesses and a plurality of macro-recesses larger than the micro-recesses on an inner circumferential surface of a retainer, in which the micro-recesses are grooves having a width of more than 0 µm and 5000 µm or less, the grooves are arranged in parallel at intervals, and a ratio of the width to the interval is more than 0% and 71.4% or less. It is also described that the above-described specific surface roughness is applied to a resin retainer such as polyphenylene sulfide or a seal lip as the retainer.

### CITATION LIST

### PATENT LITERATURE

Patent Literature 1: JP6485014B

### SUMMARY OF INVENTION

### TECHNICAL PROBLEM

However, Patent Literature 1 does not specifically refer to the micro-recesses. Although it is described that the micro-recesses move a lubricant by capillary action, no sufficient effect can be expected since there is a certain condition for roughness at which the lubricant spreads.

In view of the above, an object of the present invention is to provide a sliding member in which a first member having a low hardness and a second member having a high hardness slide against each other via a lubricant, the sliding member having an optimized profile relationship between large waviness and fine roughness applied to the first member, improved retention and wettability of the lubricant, and increased seizure resistance.

### SOLUTION TO PROBLEM

It is considered that a mechanism for improving seizure resistance is that large waviness functions as oil reservoirs, and fine irregularities function to supply base oil of grease or lubricating oil to a contact surface with a mating material, thereby maintaining a good lubrication state of a sliding surface for a long time. For this reason, it is necessary to define profiles of both the large waviness and the fine irregularities to favorably implement both the oil reservoirs and supply of the lubricant. Applying this technique to a surface of the first member having a low hardness which is in contact with the second member having a high hardness can achieve improved lubricity, reduced friction and wear, increased seizure resistance of the entire sliding member, and extended life.

The present invention is based on such findings, and the object of the present invention is implemented by a following configuration [1] related to a sliding member.
[1] In a sliding member in which a first member and a second member having a higher hardness than the first member slide against each other via a lubricant,
   an isotropic texture in which a valley area is 1000 µm²/mm or more and 20000 µm²/mm or less and RLo (λc: 0.08 mm) is 1% or more and 12% or less is applied to a part of the first member which is in contact with the second member.
   A preferred embodiment according to the present invention relating to the sliding member relates to following [2] to [8].
[2] In the sliding member according to [1], the valley area is 4000 µm²/mm or more and 12000 µm²/mm or less.
[3] In the sliding member according to [2], the valley area is 6000 µm²/mm or more and 12000 µm²/mm or less.
[4] In the sliding member according to [3], the valley area is 8000 µm²/mm or more and 10000 µm²/mm or less.
[5] In the sliding member according to any one of [1] to [4], the first member is a resin member, and the second member is a metal member or a ceramic member.
[6] In the sliding member according to [5], the first member is a resin retainer of a rolling bearing, and the second member is a metal rolling element or a ceramic rolling element.
[7] In the sliding member according to [5], the second member is a metal rolling element or a ceramic rolling element of a linear motion device, and the first member is a spacer interposed between the metal rolling elements or between the ceramic rolling elements.
[8] In the sliding member according to [5], the first member is a resin gear, and the second member is a metal gear or a ceramic gear.

### ADVANTAGEOUS EFFECTS OF INVENTION

According to the sliding member of the present invention, by optimizing the profile relationship between large waviness and fine roughness formed on a sliding contact surface of the first member having a low hardness which is in sliding contact with the second member having a high hardness, lubricity between the two members is improved, and seizure resistance is improved by reducing friction and wear, leading to a further extended life of the sliding member.

### BRIEF DESCRIPTION OF DRAWINGS

FIG. 1 is a cross-sectional view illustrating an angular contact ball bearing as an example of a sliding member according to the present invention.
FIG. 2 shows results of measuring irregularities on surfaces of resin samples used in Experiment 1.
FIG. 3A shows an example of calculating a valley area.
FIG. 3B is a flowchart showing a method for calculating a valley area.
FIG. 4 is a graph showing results of Experiment 1.
FIG. 5 collectively shows a valley area and fine roughness of resin samples used in Experiment 2.
FIG. 6 collectively shows a valley area and fine roughness of resin samples used in Experiment 2.
FIG. 7 is a graph showing results of Experiment 2.
FIG. 8 is a graph showing a relationship between RLo (λc = 0.08 mm) and seizure life of resin samples having large oil reservoirs.
FIG. 9 is a schematic diagram showing sampling in Experiment 3.
FIG. 10 is a graph showing results (RLo (λc = 0.08 mm)) of Experiment 3.
FIG. 11 is a graph showing results (valley area) of Experiment 3.

### DESCRIPTION OF EMBODIMENTS

A rolling bearing will be described below as an example of an embodiment of a sliding member of the present invention. The present embodiment is an example of the present invention, and the present invention is not limited to the present embodiment. Various modifications or improvements can be added to the present embodiment, and embodiments to which such modifications or improvements are added can also be included in the present invention.

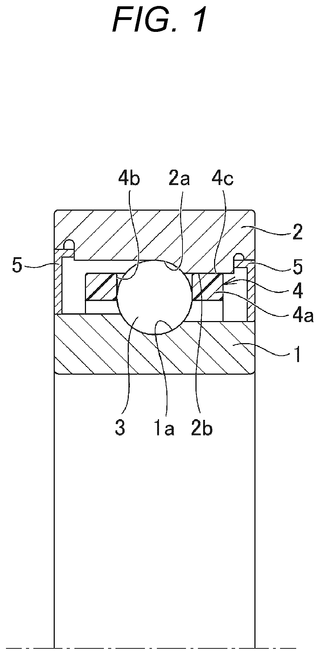

In the present embodiment, a type of the rolling bearing is not limited, and for example, an outer ring guide type angular contact ball bearing illustrated in FIG. 1 can be exemplified.

The angular contact ball bearing illustrated in FIG. 1 includes an inner ring 1 having a raceway surface 1a on an outer circumferential surface, an outer ring 2 having a raceway surface 2a facing the raceway surface 1a of the inner ring 1 on an inner circumferential surface, a plurality of rolling elements (balls) 3 rollable between the raceway surface 1a of the inner ring 1 and the raceway surface 2a of the outer ring 2, a retainer 4 holding the plurality of rolling elements 3 between the inner ring 1 and the outer ring 2, and a contact type seal 5 covering an opening of a gap between the inner ring 1 and the outer ring 2. The rolling element 3 is made of metal or ceramic and corresponds to a "second member" having a high hardness. The gap between the inner ring 1 and the outer ring 2 is filled with a lubricant (not illustrated) such as grease or lubricating oil, and sealed with the seal 5.

The retainer 4 is made of resin such as polyphenylene sulfide (PPS), polyamide, polyacetal, polyether ether ketone (PEEK), or fluororesin. The retainer 4 made of resin corresponds to a "first member" having a low hardness. A reinforcing material such as glass fibers or carbon fibers may be further contained. A shape of the retainer 4 is not limited, and the present invention can be applied to all types of bearing retainers such as crown-shaped, wave-shaped, cage-shaped, and horn-shaped.

In the present embodiment, at least a surface of the retainer 4 which is in contact with another member, here, a pocket inner surface and an outer ring guide surface of the retainer 4, is applied with a specific texture described below, that is, prescribed large waviness and prescribed fine roughness.

The application of large waviness can be expected to have an effect of oil reservoirs that retain a lubricant in valley parts of irregularities. A larger valley part that retains the lubricant can be expected to have a better effect of an oil reservoir, and a size of a valley part can be calculated from an area (valley area) of a part corresponding to (Pk + Pvk) of a cross-sectional profile. Pk and Pvk are standardized by ISO 21920, in which Pk is a level difference of a core portion, and Pvk is a height of a protruding valley part.

Here, following Experiment 1 was conducted to verify an oil reservoir performance of large waviness.

### Experiment 1: Verification of Oil Reservoir Performance of Large Waviness

An experiment was conducted in which a resin sample regarded as a retainer and a metal component regarded as a rolling element slid against each other, and a valley area indicating a size of large waviness of the resin sample was changed to compare seizure lives. The metal component had a polished surface profile used in general rolling elements. A stylus type roughness measuring machine and a non-contact type white light interference surface profile measuring machine were used for measuring the valley area of the resin sample. The seizure life was measured using a rotary friction tester. Seizure was determined when a friction coefficient monitored during a test exceeded a prescribed value.

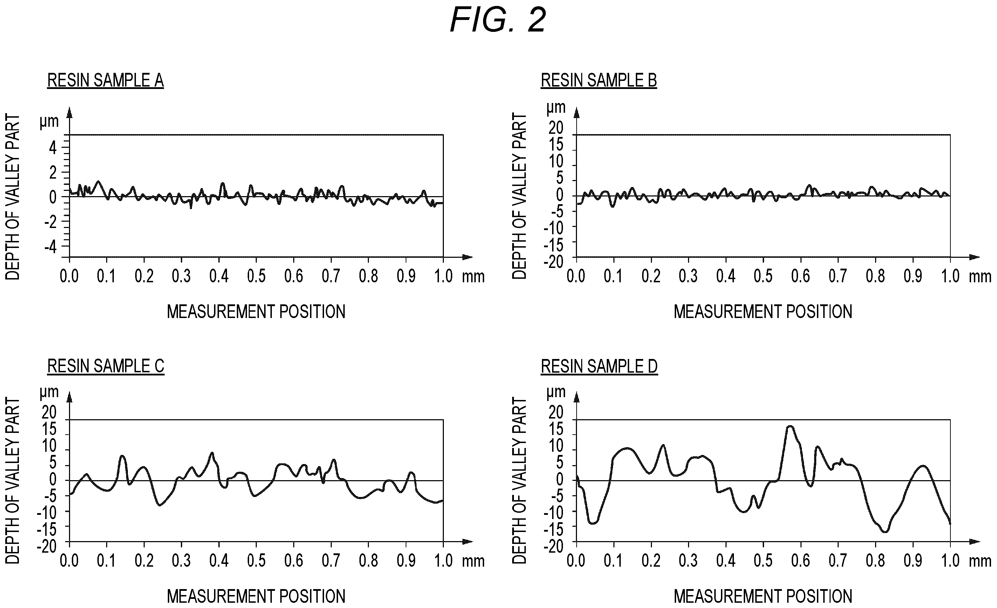

Four types of resin samples A to D having different valley areas as shown in Table 1 were used as resin samples. FIG. 2 shows results of measuring irregularity profiles on a surface of each resin sample. In each graph of FIG. 2, a vertical axis represents a depth (µm) of a valley part, and a horizontal axis represents a measurement position (mm).

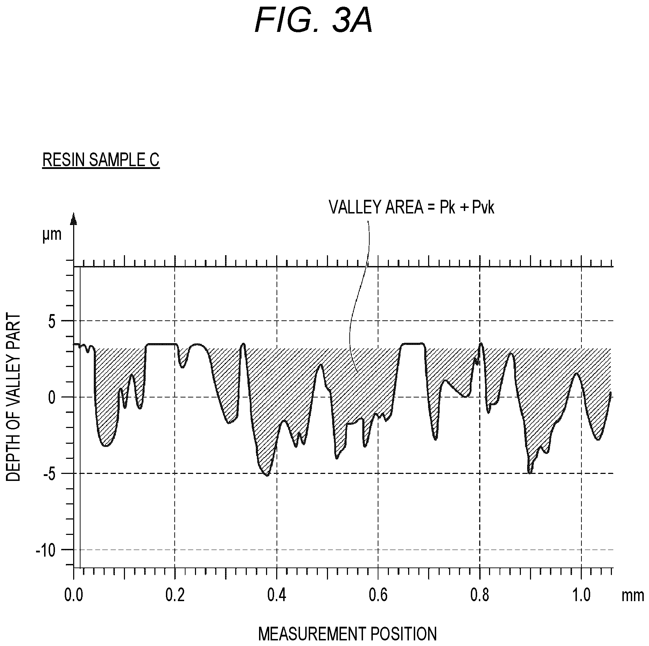

FIG. 3A shows a valley area of the resin sample C as a calculation example of a valley area, in which a hatched part in the drawing is the valley area, that is, (Pk + Pvk).

**[Table 1]**

| Table 1. Profile of Texture | | |
|---|---|---|
| Resin Sample | Oil Reservoir | Valley Area (µm²·mm⁻¹) |
| A | No | 494 |
| B | Small | 1895 |
| C | Medium | 4033 |
| D | Large | 8452 |

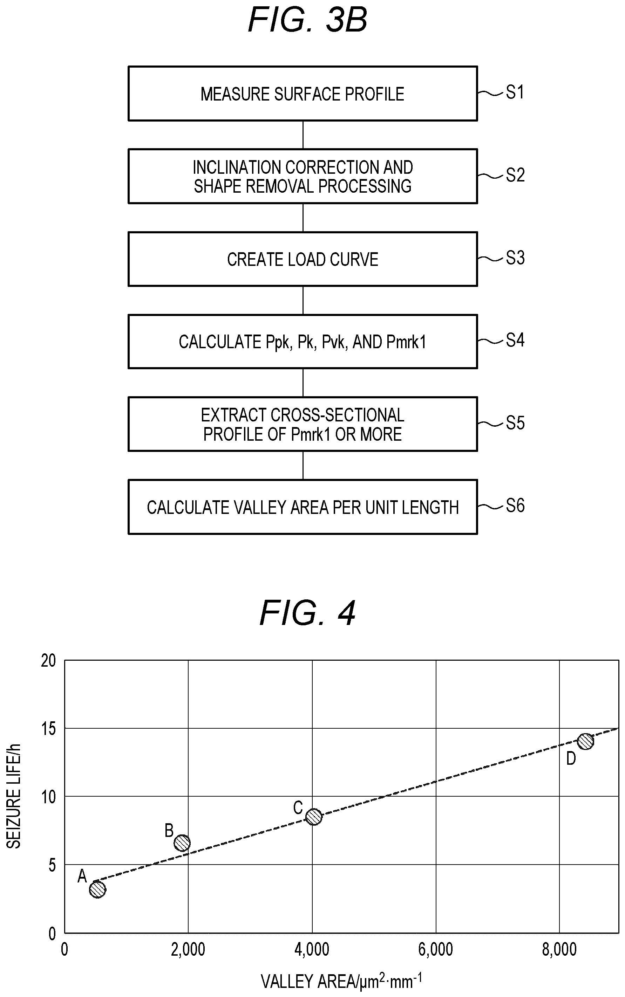

Here, a method for calculating a valley area will be described with reference to FIG. 3B. FIG. 3B is a flowchart showing the method for calculating a valley area. As shown in FIG. 3B, first, irregularity profiles on a surface of a target sample are measured (step S1: measure surface profile). Subsequently, a cross-sectional profile is created by performing inclination correction and shape removal processing on the measured surface profile (step S2: inclination correction and shape removal processing), and a load curve is created based on the obtained cross-sectional profile (step S3: create load curve). Subsequently, Ppk, Pk, Pvk, and Pmrk1 are calculated from the load curve (step S4: calculate Ppk, Pk, Pvk, and Pmrk1). Further, a part corresponding to Pmrk1 or more is extracted from the cross-sectional profile (step S5: extract cross-sectional profile of Pmrk1 or more), a profile of a part corresponding to Pk + Pvk is created, an area of a valley part thereof is calculated, and a value per unit length obtained by dividing the area by a data length of the cross-sectional profile is set as a valley area (step S6: calculate valley area per unit length).

Ppk, Pk, Pvk, and Pmrk1 described above use parameters defined in ISO 21920.

Subsequently, FIG. 4 graphically shows a relationship between valley area and seizure life, and the valley area and the seizure resistance (seizure life) are in a linear relationship. It is shown that, with a valley area of 1000 µm²/mm or more, the seizure resistance is substantially 1.5 times that of the resin sample A without oil reservoirs (resin sample A in FIG. 4). In addition, FIG. 4 shows higher seizure resistance of substantially 2.6 times with a valley area of 4000 µm²/mm or more, substantially 3 times with a valley area of 5000 µm²/mm or more, and substantially 3.5 times with a valley area of 6000 µm²/mm or more, and an excellent seizure resistance effect can be expected. On the other hand, a larger valley area means a larger irregularity, which may cause vibration or acoustic defect of a retainer. Therefore, it is considered that the valley area is desirably 20000 µm²/mm or less at most.

From the above, it can be said that a profile in which a valley area of a part corresponding to (Pk + Pvk) is 1000 µm²/mm or more, more preferably 4000 µm²/mm or more, still more preferably 5000 µm²/mm or more, still more preferably 6000 µm²/mm or more, and most preferably 8000 µm²/mm or more, and 20000 µm²/mm or less, more preferably 15000 µm²/mm or less, still more preferably 12000 µm²/mm or less, and most preferably 10000 µm²/mm or less is preferred in terms of the large waviness.

It is considered that supply of a lubricant to a contact surface is implemented by spreading of oil, and a spreading speed is related to presence or absence of fine irregularities on the surface. Hereinafter, verification based on a difference in fine roughness was conducted in Experiment 2.

### Experiment 2: Verification Based on Difference in Fine Roughness

As shown in Table 2, resin samples C to C4 and D to D4 having different oil reservoirs and fine roughness were prepared. As the resin samples C2 to C4, resin samples each having a valley area similar to that of the resin sample C having "medium" oil reservoirs, which exhibited excellent seizure resistance in Experiment 1, were used, and the resin samples have different fine roughness. As the resin samples D2 to D4, resin samples each having a valley area similar to that of the resin sample D having "large" oil reservoirs, which exhibited excellent seizure resistance in Experiment 1, were used, and the resin samples have different fine roughness.

The fine roughness can be expressed by roughness RLo using a small cutoff filter, and RLo using λc: 0.08 mm is adopted here. "RLo" is a roughness standard described in ISO 1984, and is referred to as "extended length of profile" . Then, a ratio of a length measured on a profile curve to a length of a profile exceeding 100% is expressed as "%". For a smooth surface without irregularities, the ratio is 0%.

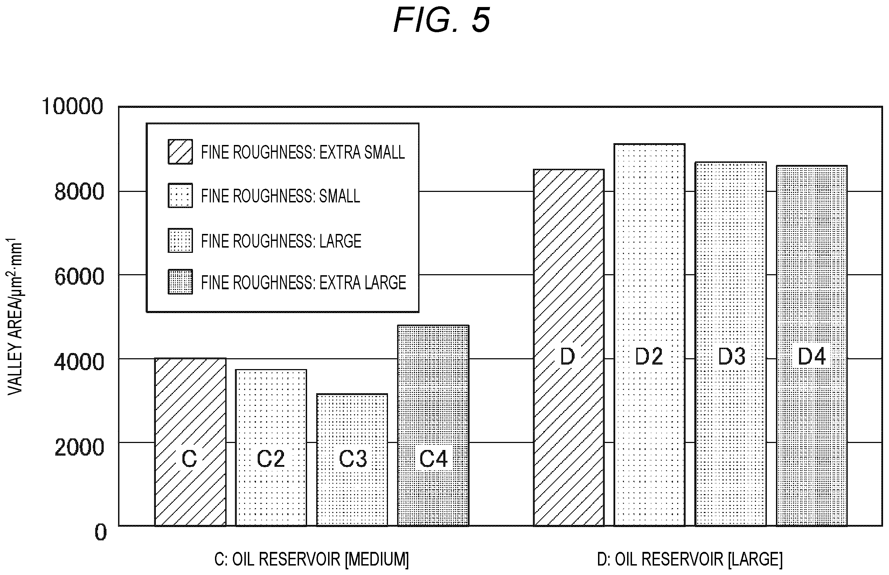

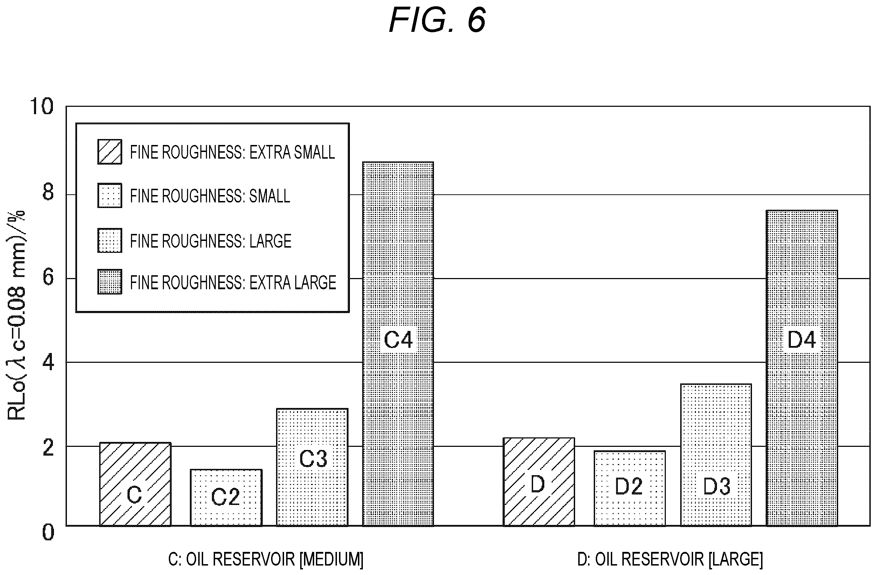

Surface properties of each resin sample used in evaluation are shown in Table 2, and a relationship between a valley area and RLo (λc: 0.08 mm) of each resin sample is graphically shown in FIGS. 5 and 6. The "fine roughness" was determined from a 3D profile using a white light interference type surface profile measuring machine Talysurf CCI manufactured by AMETEK, Inc.

**[Table 2]**

| Table 2. List of Sample Profiles | | | | |
|---|---|---|---|---|
| Resin Sample | Oil Reservoir | Valley Area (µm²·mm⁻¹) | Fine Roughness | RLo (λc = 0.08 mm) (%) |
| C | Medium | 4033 | Extra Small | 1.87 |
| C2 | Medium | 3744 | Small | 1.29 |
| C3 | Medium | 3118 | Large | 2.70 |
| C4 | Medium | 4783 | Extra Large | 8.73 |
| D | Large | 8452 | Extra Small | 1.94 |
| D2 | Large | 9040 | Small | 1.66 |
| D3 | Large | 8638 | Large | 3.28 |
| D4 | Large | 8482 | Extra Large | 7.53 |

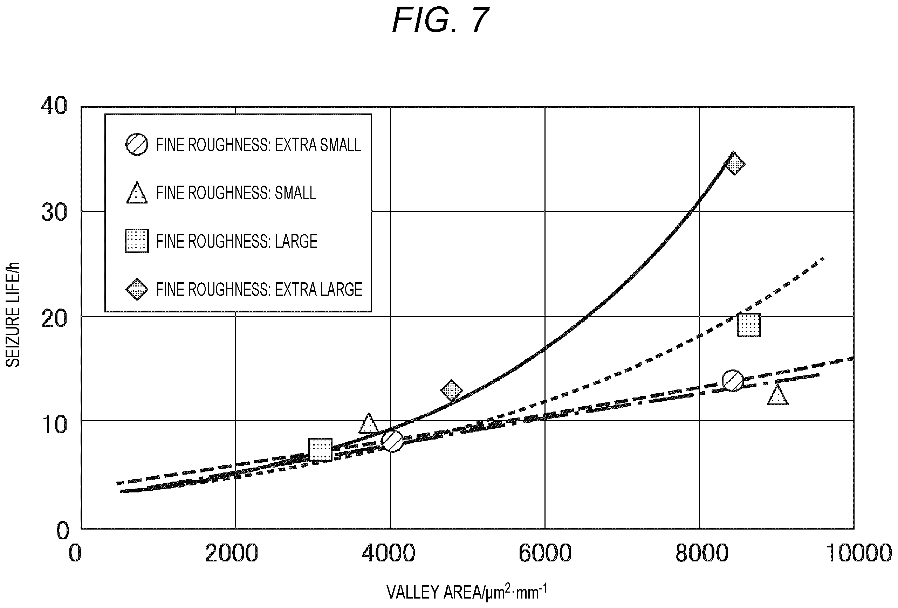

Similar to Experiment 1, the seizure life was measured by a rotary friction tester using a metal component regarded as a rolling element. Results are shown in FIG. 7.

As shown in FIG. 7, in comparison of the resin samples C to C4 having medium oil reservoirs, seizure lives were similar regardless of presence or absence and a size of fine roughness. On the other hand, in comparison of the resin samples D to D4 having large oil reservoirs, it is confirmed that the resin sample D3 in which an increase in RLo (λc: 0.08 mm) was observed had a seizure life of substantially 1.5 times that of the resin sample D having "extra small" fine roughness.

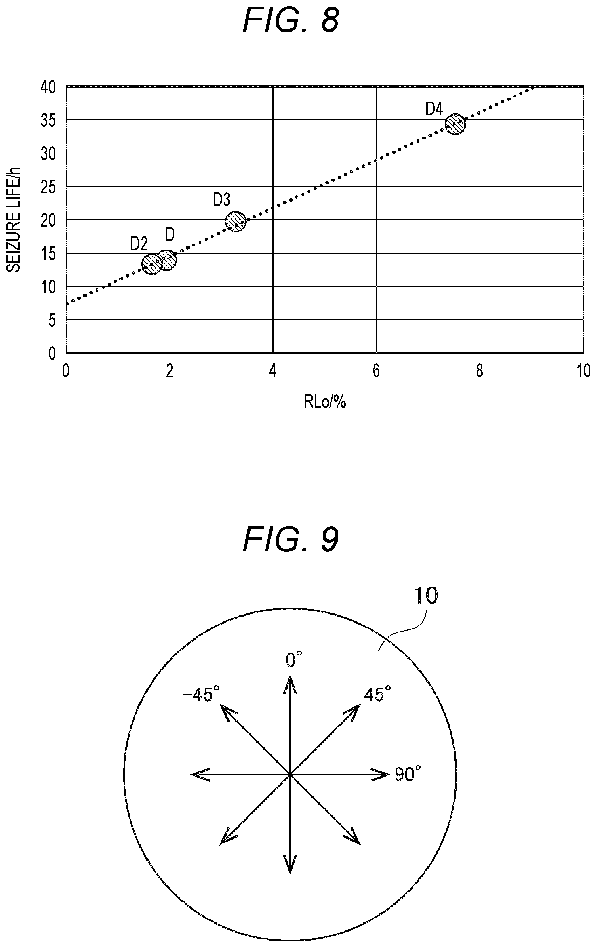

FIG. 8 is a graph showing a relationship between RLo (λc = 0.08 mm) and seizure life of a resin sample having large oil reservoirs. The RLo (λc = 0.08 mm) and the seizure life are in a linear relationship, and with seizure life when RLo ≈ 0 calculated by extrapolation taken as a reference, it can be seen that the seizure resistance is substantially 1.5 times when RLo = 1%, substantially 2 times when RLo = 2%, substantially 2.5 times when RLo = 3%, substantially 3.5 times when RLo = 5%, and substantially 4.5 times when RLo = 7%.

Therefore, it can be said that a profile in which, in terms of the fine roughness, RLo (λc: 0.08 mm) is preferably 1% or more, more preferably 2% or more, still more preferably 3% or more, still more preferably 5% or more, and most preferably 7% or more, and RLo (λc: 0.08 mm) is preferably 12% or less, more preferably 10% or less, and most preferably 9% or less is preferred.

From the above, it can be seen that particularly high seizure resistance can be expected by applying a texture in which a valley area serving as an oil reservoir, that is, an area of a part corresponding to (Pk + Pvk), is large and RLo (λc: 0.08 mm) indicating fine roughness is 1% or more.

The fine roughness parameter RLo (λc: 0.08 mm) has a limit in size, and it is considered that the size that can be practically applied is RLo (λc: 0.08 mm) = 12% or less.

As described above, it is understood from Experiment 1 and Experiment 2 that high seizure resistance can be obtained by applying a texture in which a valley area of a part corresponding to (Pk + Pvk) is 1000 µm²/mm or more, preferably 6000 µm²/mm or more, and 20000 µm²/mm or less, and RLo (λc: 0.08 mm) is 1% or more and 12% or less.

The texture is preferably an isotropic texture in which the same value can be obtained when measured in any direction. It is considered that, by applying the isotropic texture, an effect of oil reservoirs and an effect of supplying a lubricant to a contact surface due to fine roughness can be expected regardless of a sliding direction.

### Experiment 3: Verification of Application of Prescribed Isotropic Texture in Each Orientation

Resin samples having surface properties shown in Table 3 were prepared. The resin samples were similar to those in Experiment 2.

**[Table 3]**

| Table 3. List of Sample Profiles | | |
|---|---|---|
| Resin Sample | Oil Reservoir | Fine Roughness |
| A | No | No |
| C3 | Medium | Large |
| C4 | Medium | Extra Large |
| D4 | Large | Extra Large |

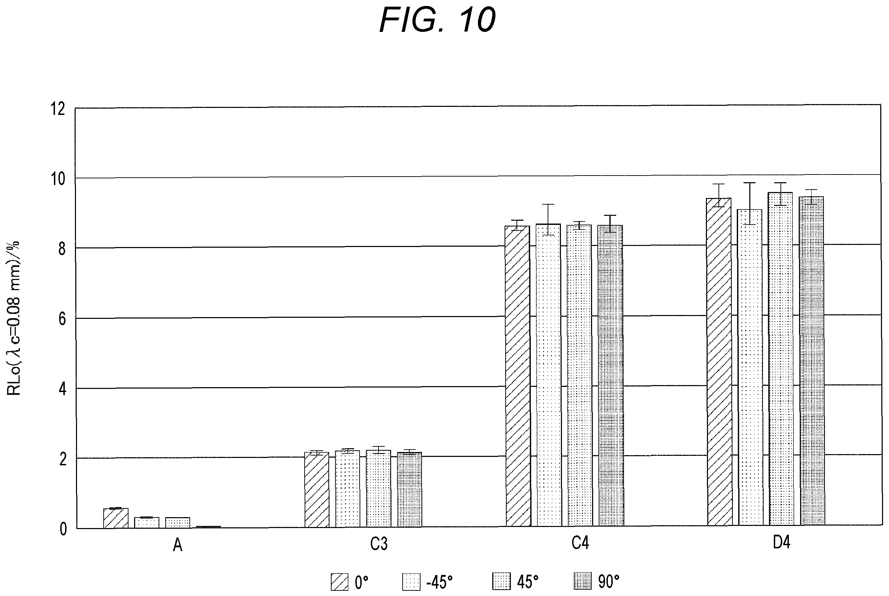

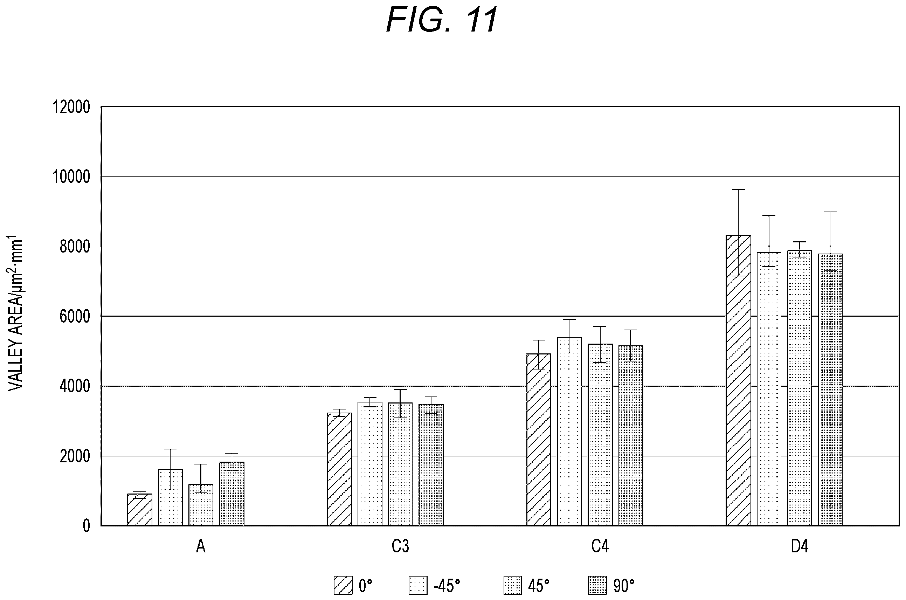

As shown in FIG. 9, RLo (λc: 0.08 mm) and valley area were measured in four positions in four directions (0°, -45°, 45°, and 90°) at equal intervals of 45° in terms of a resin sample 10. In terms of a texture having streaks, measurement was conducted such that a direction perpendicular to the streaks was 0° and a direction parallel to the streaks was 90°. Results are graphically shown in Tables 4 to 6 and FIGS. 10 and 11. FIG. 10 shows the result of RLo, and FIG. 11 shows the result of the valley area. Table 4 shows average values of measured values, Table 5 shows maximum values of measured values, and Table 6 shows minimum values of measured values.

**[Table 4]**

| Table 4. Measurement Results (Average Value) of RLo (λc = 0.08 mm) And Valley Area | | | | | | | | |
|---|---|---|---|---|---|---|---|---|
| Measurem ent Position | RLo (%) | | | | Valley Area (µm²/mm) | | | |
| | A | C3 | C4 | D4 | A | C3 | C4 | D4 |
| 0⁰ | 0.57 | 2.15 | 8.57 | 9.34 | 902.83 | 3233.02 | 4927.78 | 8322.95 |
| -45° | 0.30 | 2.19 | 8.62 | 9.02 | 1623.76 | 3542.13 | 5400.64 | 7808.11 |
| 45° | 0.29 | 2.20 | 8.59 | 9.50 | 1175.33 | 3521.74 | 5208.54 | 7879.41 |
| 90° | 0.03 | 2.13 | 8.58 | 9.37 | 1822.01 | 3477.27 | 5159.21 | 7784.96 |

**[Table 5]**

| Table 5. Measurement Results (Maximum Value) of RLo (λc = 0.08 mm) And Valley Area | | | | | | | | |
|---|---|---|---|---|---|---|---|---|
| Measurem ent Position | RLo (%) | | | | Valley Area (µm²/mm) | | | |
| | A | C3 | C4 | D4 | A | C3 | C4 | D4 |
| 0⁰ | 0.58 | 2.19 | 8.73 | 9.75 | 975.66 | 3342.02 | 5316.50 | 9627.85 |
| -45° | 0.33 | 2.23 | 9.19 | 9.78 | 2196.10 | 3678.70 | 5905.57 | 8883.54 |
| 45° | 0.30 | 2.30 | 8.69 | 9.77 | 1767.32 | 3903.39 | 5707.06 | 8121.27 |
| 90° | 0.04 | 2.21 | 8.87 | 9.57 | 2075.66 | 3691.67 | 5615.48 | 8985.48 |

**[Table 6]**

| Table 6. Measurement Results (Minimum Value) of RLo (λc = 0.08 mm) And Valley Area | | | | | | | | |
|---|---|---|---|---|---|---|---|---|
| Measurem ent Position | RLo (%) | | | | Valley Area (µm²/mm) | | | |
| | A | C3 | C4 | D4 | A | C3 | C4 | D4 |
| 0⁰ | 0.54 | 2.06 | 8.44 | 9.10 | 778.52 | 3140.39 | 4459.12 | 7153.14 |
| -45° | 0.28 | 2.11 | 8.31 | 8.58 | 1025.43 | 3405.85 | 4960.60 | 7423.06 |
| 45° | 0.29 | 2.10 | 8.46 | 9.13 | 932.34 | 3091.46 | 4664.53 | 7682.64 |
| 90° | 0.03 | 2.07 | 8.38 | 9.16 | 1597.55 | 3216.23 | 4711.73 | 7291.34 |

As shown in these results, it can be seen that a texture in which a valley area of a part corresponding to (Pk + Pvk) is 1000 µm²/mm or more and 20000 µm²/mm or less and RLo (λc: 0.08 mm) is 1% or more and 12% or less is isotropically applied in each orientation.

Although a rolling bearing has been described as an example in the present invention, a combination of a first member having a low hardness and a second member having a high hardness is not limited. For example, in a combination of a metal rolling element or a ceramic rolling element of a linear motion device and a resin spacer interposed between the metal rolling elements or between the ceramic rolling elements, or a combination of a resin gear and a metal gear or a ceramic gear, an isotropic texture having surface properties defined in the present invention can be applied to a part of a resin member which is in contact with a metal member or a ceramic member.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, within the scope not departing from the gist of the invention, configuration elements in the above embodiments may be combined in any manner.

The present application is based on a Japanese patent application (No. 2022-154942) filed on September 28, 2022, contents of which are incorporated herein by reference.

### REFERENCE SIGNS LIST

1 inner ring
2 outer ring
3 rolling element (ball)
4 retainer
5 seal
10 resin sample

## Claims

1. A sliding member in which a first member and a second member having a higher hardness than the first member slide against each other via a lubricant, wherein
an isotropic texture in which a valley area is 1000 µm²/mm or more and 20000 µm²/mm or less and RLo (λc: 0.08 mm) is 1% or more and 12% or less is applied to a part of the first member which is in contact with the second member.

2. The sliding member according to claim 1, wherein the valley area is 4000 µm²/mm or more and 12000 µm²/mm or less.

3. The sliding member according to claim 2, wherein the valley area is 6000 µm²/mm or more and 12000 µm²/mm or less.

4. The sliding member according to claim 3, wherein the valley area is 8000 µm²/mm or more and 10000 µm²/mm or less.

5. The sliding member according to any one of claims 1 to 4, wherein the first member is a resin member, and the second member is a metal member or a ceramic member.

6. The sliding member according to claim 5, wherein the first member is a resin retainer of a rolling bearing, and the second member is a metal rolling element or a ceramic rolling element.

7. The sliding member according to claim 5, wherein the second member is a metal rolling element or a ceramic rolling element of a linear motion device, and the first member is a spacer interposed between the metal rolling elements or between the ceramic rolling elements.

8. The sliding member according to claim 5, wherein the first member is a resin gear, and the second member is a metal gear or a ceramic gear.
